# EUROPÄISCHE PATENTSCHRIFT

(11) **EP 2 500 574 B1**
(45) Veröffentlichungstag und Bekanntmachung des Hinweises auf die Patenterteilung: **29.06.2016**
(21) Anmeldenummer: 11002070.8
(22) Anmeldetag: 12.03.2011
(51) Int. Cl.: F04D 13/06, F04D 29/02, F04D 29/42, H02K 5/128, H02K 5/22

(54) **Heizungsumwälzpumpe**
Heat circulation pump
Pompe de recirculation de chauffage

(43) Veröffentlichungstag der Anmeldung: 19.09.2012
(73) Patentinhaber: Grundfos Management a/s, 8850 Bjerringbro (DK)
(72) Erfinder: Høj, Finn Mathiesen, 8200 Aarhuis N (DK)
(74) Vertreter: Vollmann, Heiko

(56) Entgegenhaltungen:
- EP-A1- 1 204 194
- EP-A1- 1 437 819
- DE-A1- 4 418 166
- DE-A1-102007 022 070

## Beschreibung

Die Erfindung betrifft eine Heizungsumwälzpumpe mit den im Oberbegriff des Anspruchs 1 angegebenen Merkmalen.

Derartige Heizungsumwälzpumpen zählen zum Stand der Technik. Sie weisen typischerweise ein Pumpengehäuse mit einem Saug- und einem Druckstutzen sowie ein darin angeordnetes Pumpenlaufrad auf. Zum Antrieb des Pumpenlaufrads ist ein Elektromotor vorgesehen, dessen Welle das Pumpenlaufrad trägt. Der den Rotor umgebende Stator ist in einem Gehäuse angeordnet, welches an seiner zum Pumpengehäuse weisenden Seite einen Flansch oder dergleichen Anschlusselement aufweist, über den das Motorgehäuse, insbesondere das Statorgehäuse mit dem Pumpengehäuse verbunden ist. Zum elektrischen Anschluss des Motors ist ein Klemmenkasten vorgesehen, welcher an der vom Pumpengehäuse abgewandten Axialseite des Statorgehäuses angeordnet ist. Der Klemmenkasten umfasst typischerweise auch die Motorelektronik, also beispielsweise einen Frequenzumrichter. Eine Heizungspumpe der vorgenannten Art ist beispielsweise aus DE 10 2004 030 721 B3 oder DE 44 18 166 A1 bekannt.

Die Heizungsumwälzpumpen der vorgenannten Art weisen ein Motorgehäuse auf, das im Bereich zwischen Motorflansch und Klemmenkasten eine kreisrunde Grundkontur hat. Der sich an das Motorgehäuse anschließende Klemmenkasten setzt diese Kontur fort.

Aus EP 1 437 819 A1 zählt ein Pumpenaggregat zum Stand der Technik, welches einen vierpoligen Motor aufweist, weshalb die Außenkontur des Motorgehäuses im Wesentlichen rechteckig ist und nur im Bereich der Flanschverschraubungen Aussparungen vorgesehen sind, um die Zugänglichkeit der Verschraubungen zu gewährleisten. Der sich hier axial an das Motorgehäuse anschließende Klemmenkasten setzt diese rechteckige Außenkontur des Motors im Wesentlichen fort.

Derartige Heizungsumwälzpumpen kleiner und mittlerer Bauart werden in Großserien hergestellt, weshalb auch kleinste Verbesserungen schon große Einsparungen bei Fertigung und/oder Montage bedeuten können. Es ist ein stetes Bestreben diese Pumpen einerseits technisch weiter zu verbessern und noch zuverlässiger zu gestalten andererseits die Herstellungs- und Montagekosten zu senken.

Diese Aufgabe wird gemäß der Erfindung durch eine Heizungsumwälzpumpe mit den in Anspruch 1 angegebenen Merkmalen gelöst. Vorteilhafte Ausgestaltungen der Erfindung sind in den Unteransprüchen der nachfolgenden Beschreibung und der Zeichnung angegeben.

Die Heizungsumwälzpumpe gemäß der Erfindung weist ein Pumpengehäuse mit darin angeordnetem Pumpenlaufrad auf, das von einem Elektromotor angetrieben ist, der in einem axial an das Pumpengehäuse angeflanschten Motorgehäuse angeordnet ist. Axial an das Motorgehäuse schließt ein Klemmenkasten zur Aufnahme von elektrischen und/oder elektronischen Bauteilen für die Motorsteuerung und zum elektrischen Anschluss des Motors an. Dabei weist das Motorgehäuse im Bereich zwischen Motorflansch und Klemmenkasten eine kreisrunde Grundkontur in axialer Richtung auf. Gemäß der Erfindung ist der Klemmenkasten so ausgebildet, dass er das klemmenkastenseitige Ende des Motorgehäuses radial zumindest abschnittsweise überragt und eine in axialer Richtung im Wesentlichen rechteckige Außenkontur mit Aussparungen in den Eckbereichen aufweist, die in axialer Verlängerung von Schrauben angeordnet ist, mit denen der Flansch des Motorgehäuses am Pumpengehäuse befestigt ist.

Grundgedanke der erfindungsgemäßen Lösung ist es, den Klemmenkasten so auszubilden, dass er das im Anschlussbereich typischerweise kreisrunde Motorgehäuse radial überragt und zwar zu einer im Wesentlichen rechteckigen Außenkontur, wobei die Eckbereiche ausgespart sind, da diese Bereich in Flucht zu den Schrauben liegen, mit welchem der Flansch des Motorgehäuses am Pumpengehäuse befestigt ist. Diese Aussparungen gewährleisten, dass die Schraubenköpfe mit einem Werkzeug zugänglich sind, das in Achsrichtung der Schrauben vom Klemmenkasten aus zugeführt wird, also beispielsweise ein Schraubendreher oder ein Schlüssel für einen Innensechskant. Der Klemmenkasten wird also gezielt in den Bereichen aufgeweitet, die meist ohnehin nicht nutzbar und die typischerweise innerhalb der radialen Außenkontur des Pumpengehäuses liegen.

Vorteilhaft weist der Klemmenkasten in seinem das Motorgehäuse radial überragenden Bereich Befestigungsmittel auf, mit denen der Klemmenkasten am Motorgehäuse befestigt ist. Diese Anordnung ist besonders günstig, da dann am klemmenkastenseitigen Ende des Motorgehäuses sowie am Umfang des kreisrunden Teils des Motorgehäuses keine Befestigungsmittel angreifen, sondern vorteilhaft erst im Flanschbereich des Motorgehäuses. Diese Anordnung ist werkzeugtechnisch bei Gussgehäusen besonders günstig und somit fertigungstechnisch von Vorteil.

Vorteilhaft sind die Befestigungsmittel durch Schnappverbindungen gebildet, die das Motorgehäuse radial und axial zumindest teilweise übergreifen. Solche Schnappverbindungen haben den Vorteil, dass der Klemmenkasten werkzeugfrei am Motorgehäuse montiert werden kann.

Um ein axiales Übergreifen zu ermöglichen, sind im Flanschbereich des Motorgehäuses Ausnehmungen vorgesehen, in die vorteilhaft Schnappvorsprünge eingreifen, die an Zungen angeordnet sind, die sich von den radial überragenden Teilen des Klemmenkastens in axialer Richtung längs des Motorgehäuses erstrecken und die am Klemmenkasten angeformt sind. Vorteilhaft sind diese Zungen an den Seiten des Klemmenkastens angeformt, an denen auch Kontaktdurchführungen, nämlich zum Motor hin einerseits und zu einer elektrischen Steckverbindung andererseits vorgesehen sind. Diese zungenartigen Vorsprünge können einstückig mit dem Grundkörper des Klemmenkastens ausgebildet werden und halten nicht nur den Klemmenkasten am Flansch des Motorgehäuses fest, sondern sichern darüber hinaus auch die elektrische Verbindung zwischen Klemmenkastenkontakten und dem Motor.

Vorteilhaft erfolgt die Anordnung so, dass an zwei gegenüberliegenden Seiten im Randbereich des Klemmenkastens die Kontakte zur Motorwicklung einerseits und die Kontakte zum elektrischen Anschluss andererseits angeordnet sind und dass der Klemmenkasten an mindestens einer zu den gegenüberliegenden Seiten in denen die Kontakte angeordnet sind um 90 Grad versetzten Seite das Motorgehäuse zumindest radial weiter überragt, als an den gegenüberliegenden Seiten, an denen die Kontakte herausgeführt sind. Durch diese Anordnung kann vorteilhaft bei üblicher senkrechter Montage der Pumpe, d. h. bei der Saug- und Druckstutzen im Wesentlichen vertikal übereinander angeordnet liegen und die Drehachse des Rotors senkrecht dazu, d. h. horizontal angeordnet ist, der elektrische Anschlussstecker oder die elektrische Anschlussmuffe einer elektrischen Steckverbindung seitlich, d. h. in Einbaulage rechts oder links des Motors bzw. Klemmenkastens, liegen, wohingegen der oder die radial überragenden Bereiche oben bzw. unten liegen, also dort, wo auch die Leitungsführung der Pumpe verläuft und ein meist ohnehin nicht nutzbarer Freiraum motorseitig bzw. klemmenkastenseitig besteht. Denn die Bereiche von Saug- und Druckstutzen müssen insbesondere bei Kompaktheizungsanlagen, in welche derartige Pumpen ebenfalls integriert sind, von vorne, d. h. in Richtung der Drehachse der Pumpe bzw. parallel dazu zugänglich sein, um die Pumpe austauschen zu können.

Eine solche Anordnung ist insbesondere dann auch von besonderem Vorteil, wenn verschiedene Klemmenkästen für denselben Motortyp verfügbar sein sollen, beispielsweise ein Klemmenkasten mit einer Pulsweitersteuerung für den Motor, ein Klemmenkasten mit integriertem Frequenzumrichter und ein Klemmenkasten mit erweiterter Sensorik. Dann können die unterschiedlichen Bauvolumina durch ein entsprechend weites oder weniger weites radiales Überragen dieser zu den elektrischen Anschlüssen um 90° versetzten Bereiche gebildet werden, wobei die elektrischen Anschlüsse sowohl zum Motor als auch zum Stecker hin unverändert beibehalten werden können. Auch werkzeugtechnisch ist dies von Vorteil, da die entsprechend unterschiedlich ausgebildeten Klemmenkästen bei geeigneter Ausbildung des Werkzeugs mit ein und demselben Werkzeug hergestellt werden können.

Die durch die Klemmenkastenwandung geführten Kontakte sind vorteilhaft eingegossen und enden innerhalb des Klemmenkastens an einer Platine. Diese Anordnung ist zum einen fertigungstechnisch günstig, da die Kontakte beim Spritzgießen in die Klemmenkastenwandung fest und dich eingegliedert werden, sodass einerseits eine mechanisch feste und andererseits eine flüssigkeitsdichte Verbindung entsteht, was insbesondere von Vorteil ist, wenn der Klemmenkasten geschlossen ausgebildet werden soll, um die darin befindlichen elektrischen und elektronischen Bauteile zuverlässig vor Feuchtigkeit zu schützen. Dabei sind zum einen Kontakte vom Klemmenkasten zur Motorwicklung hin vorgesehen, welche für den elektrischen Anschluss der Motorwicklung sorgen und zum anderen Kontakte, die vom Klemmenkasteninneren mittels Stecker oder Muffe einer elektrischen Steckverbindung nach außen geführt sind und den elektrischen Anschluss der Heizungsumwälzpumpe bilden. Ein solcher Stecker oder eine solche Muffe, die zweckmäßigerweise Teil des Klemmenkastengehäuses bildet, also zumindest mit einem Teil des Klemmenkastens einstückig als Kunststoffspritzgussteil ausgebildet ist, ist vorteilhaft so angeordnet, dass sie axial versetzt zum Klemmenkasten und benachbart zum Motorgehäuse angeordnet ist. Dann ist sichergestellt, dass die Steckverbindung neben der Heizungsumwälzpumpe angeordnet ist, also diese in axialer Richtung nicht überragt.

Wenn der Motor, was bei Heizungsumwälzpumpen üblich ist, ein Nasslaufmotor ist, dann ist es gemäß einer Weiterbildung vorteilhaft, den Klemmenkastenboden vom Motorgehäuse beabstandet anzuordnen und vorzugsweise geschlossen auszubilden. Hierdurch ist einerseits eine thermische Trennung zwischen Motorgehäuse und Klemmenkasten gewährleistet, andererseits das Eindringen von Förderflüssigkeit in den Klemmenkasten, wie dies z. B. erfolgen könnte, wenn der motorseitige Stopfen zum Zugang des Wellenendes Undichtigkeiten aufweist, zuverlässig verhindert. Um trotz des axial an das Motorgehäuse anschließenden Klemmenkastens die Möglichkeit zu haben, bei blockiertem Motor von der von der Pumpe abgewandten Seite an das freie Wellenende des Motors zu gelangen, ist es zweckmäßig, wenn der Klemmenkasten eine von außen zugängliche axiale zentrale Durchführung zum Rotorraum aufweist. Es versteht sich, dass diese Durchführung gegenüber dem Inneren des Klemmenkastens abgedichtet ausgebildet ist. Typischerweise ergibt sich dadurch eine ringförmige Struktur des Klemmenkastens.

Als Motor wird vorteilhaft ein dreiphasiger Gleichstrommotor mit sechs Wicklungen eingesetzt. Derartige Permanentmagnetmotoren sind hoch effektiv und durch einen Frequenzumrichter mit praktisch beliebigen Drehzahlen ansteuerbar. Der Frequenzumrichter ist vorteilhaft in dem Klemmenkasten angeordnet.

Sechs Wicklungen sind nicht nur hinsichtlich des Wirkungsgrades des Motors von Vorteil, sondern auch hinsichtlich ihrer Anordnung, da das Motorgehäuse im Bereich zwischen Motorflansch und Klemmenkasten mit kreisrunder Grundkontur in axialer Richtung ausgestattet ist was zu kleinen Abmessungen des Motors führt und somit den erforderlichen Freiraum für den Klemmenkasten und die darin befindliche Elektronik schafft.

Die Erfindung ist nachfolgend anhand von in der Zeichnung dargestellten Ausführungsbeispielen näher erläutert. Es zeigen:
- Fig. 1: in vereinfachter perspektivischer Darstellung eine Heizungsumwälzpumpe gemäß der Erfindung,
- Fig. 2: einen Klemmenkasten mit radialen Erweiterungen in Darstellung entsprechend Fig. 1,
- Fig. 3: in perspektivischer Explosionsdarstellung Pumpe, Motor und Klemmenkasten,
- Fig. 4: in perspektivischer Explosionsdarstellung den Klemmenkasten gemäß Fig. 3 in seinem Aufbau,
- Fig. 5: eine perspektivische Ansicht des Klemmenkastens von unten,
- Fig. 6: eine perspektivische Längsschnittdarstellung von Klemmenkasten und Motor mit angesetztem Pumpenlaufrad,
- Fig. 7: in vergrößerter Darstellung einen Längsschnitt im Bereich des Erdungskontaktes zwischen Klemmenkasten und Motor und
- Fig. 8: in vergrößerter Darstellung eine Ansicht auf den Eckbereich des Motorgehäuseflansches von der Pumpenseite.

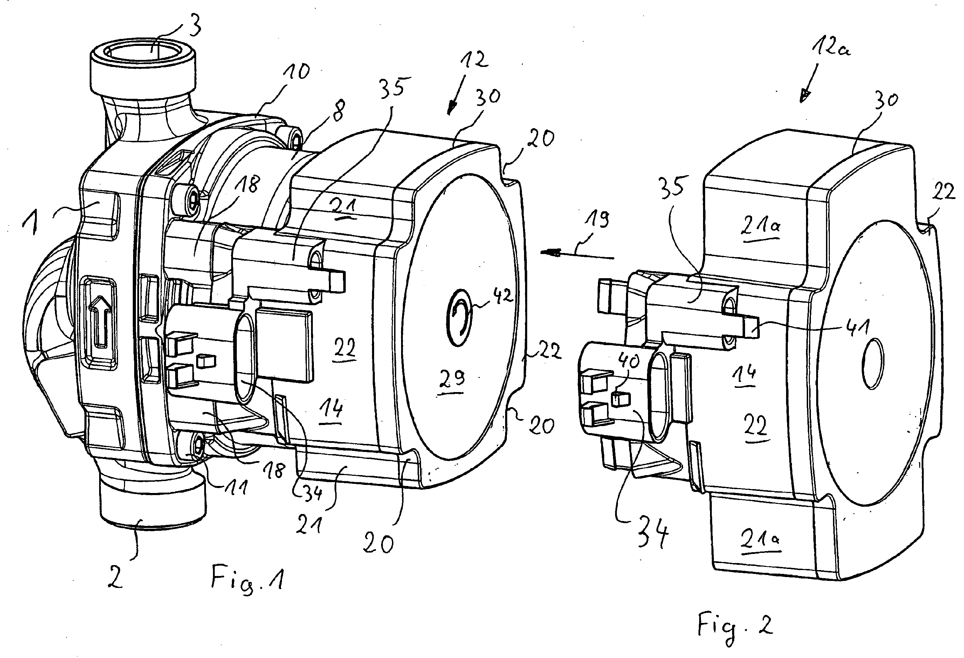

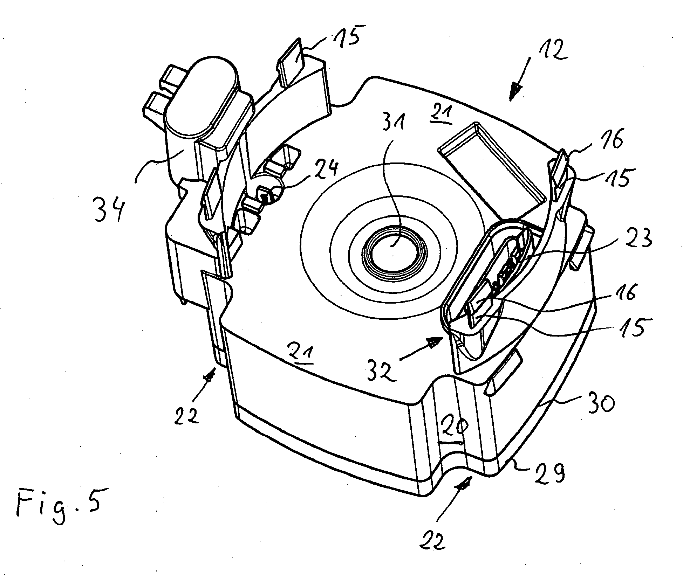

Die anhand der Figuren 1 und 3 bis 8 dargestellte Heizungsumwälzpumpe weist eine Kreiselpumpe mit einem Pumpengehäuse 1 mit einem Saugstutzen 2 und einem Druckstutzen 3 mit einer dazwischen ausgebildeten Kanalführung auf, welche die vom Saugstutzen 2 kommende Flüssigkeit einen Saugmund 4 eines innerhalb des Pumpengehäuse 1 gelagerten Pumpenlaufrads 5 zuführt, dessen Abtriebseite an einen zum Druckstutzen 3 führenden Kanal anschließt.

Die Heizungsumwälzpumpe weist weiterhin einen Motor auf, hier einem Nasslaufmotor, dessen Rotor 6 in einem Spaltrohr 7 läuft, das flüssigkeitsgefüllt ist. Umgeben wird das Spaltrohr 7 von einem Stator, d. h. von den umfangsseitig um das Spaltrohr 7 angeordneten Motorwicklungen, sowie einem Motorgehäuse 8, welches den Stator aufnimmt. Der Rotor 6 weist eine zentrale Welle 9 auf, die sich bis in das Pumpengehäuse 1 erstreckt und das Pumpenlaufrad 5 trägt, sodass die Drehbewegung des Rotors 6 auf das Pumpenlaufrad 5 übertragen wird.

Das Motorgehäuse 8 weist an seiner zum Pumpengehäuse 1 weisenden Seite einen Flansch 10 auf, mit dem es an das Pumpengehäuse 1 angeschlossen und über vier Schrauben 11 in den Eckbereichen des Flansches mit dem Pumpengehäuse 1 dicht und fest verbunden ist. In der dargestellten Ausführungsform bestehen Pumpengehäuse 1 und Motorgehäuse 8 aus Metall und sind als Gussteile gefertigt.

Bei den hier dargestellten Heizungsumwälzpumpen ist das Motorgehäuse 8 als metallisches Gussgehäuse ausgebildet. Für die vorliegende Erfindung kann das Gehäuse jedoch auch durch einen vergossenen Stator gebildet werden, wie dies dann der Fall ist, wenn die Statorwicklung in Kunststoff eingegossen ist. Auch kann das Motorgehäuse als Kunststoffspritzgussteil ausgebildet sein. Es versteht sich, dass dann der weiter unten im Einzelnen beschriebene Erdungskontakt gesondert innerhalb des Kunststoffes eingegliedert ist und elektrisch leitend mit dem Statorblechpaket und dem dann metallisch ausgebildeten Spaltrohr des Motors verbunden ist.

Die Heizungsumwälzpumpe weist weiterhin einen Klemmenkasten 12 auf, der aus Kunststoff besteht und an der vom Pumpengehäuse 1 abgewandten Axialseite des Motorgehäuses 8 angebracht ist und das Motorgehäuse 8 zu seiner Axialseite vollständig und radial, d. h. umfangsseitig, teilweise übergreift.

Die vorstehend und nachstehend aufgeführten Raumbezeichnungen axial und radial beziehen sich auf die Drehachse 13 des Rotors 6 bzw. des Pumpenlaufrades 5. Die Axialseiten sind also die Seiten, die zur Drehachse 13 im Wesentlichen senkrecht verlaufen, wohingegen Radialflächen die Flächen sind, welche sich parallel zur Drehachse erstrecken.

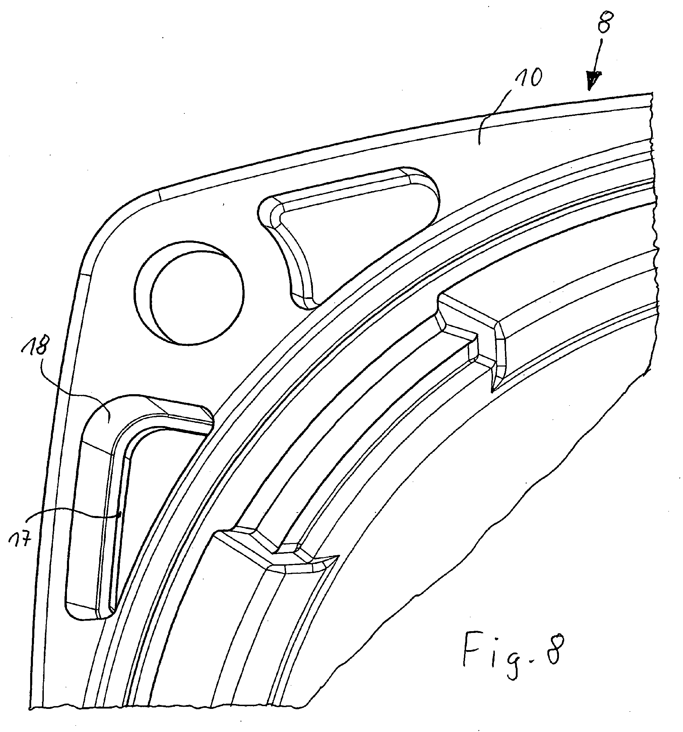

Das Motorgehäuse 8 weist im Flanschbereich einen abgerundeten im Wesentlichen quadratischen Querschnitt auf, wohingegen der übrige Teil des Motorgehäuses 8, also der sich zum Klemmenkasten 12 anschließende Teil im Wesentlichen einen kreisrunden Querschnitt aufweist und daher eine zylindermantelförmige Umfangsfläche aufweist. Während Pumpengehäuse 1 und Motorgehäuse 8 mittels vier Schrauben 11 lösbar miteinander verbunden sind, ist der aus Kunststoff bestehende Klemmenkasten 12 am Motorgehäuse 1 durch Schnappverbindungen befestigt. Hierzu weist der Klemmenkasten 12 vier sich aus den Seitenwandungen 14 des Klemmenkastens zum Pumpengehäuse 1 hin erstreckende Zungen 15 auf, an deren Ende seitlich Schnappvorsprünge 16 angeordnet sind, die Schnappausnehmungen 17 im Motorgehäuse 8 hintergreifen, welche am Motorgehäuse 8 im bereich des Flansches 10 angeformt sind. Diese Schnappausnehmungen 17 sind jeweils durch eine Stufe in einer rohrförmigen vom Flansch 10 zum Klemmenkasten 12 weisenden Führung 18 am Motorgehäuse 8 gebildet (siehe Fig. 8).

Beim Aufstecken des Klemmenkastens 12 auf das Motorgehäuse 8 in Achsrichtung, also in Aufsteckrichtung 19, gelangen die Zungen 15 in die fluchtend dazu angeordneten Führungen 18, wobei die Schnappvorsprünge 16 durch Querauslenkung der Zungen seitlich nach innen an den die Schnappausnehmungen 17 bildenden Stufen vorbeifahren und nach Überfahren derselben durch elastisches Rückstellen der Zungen 15 nach außen einrasten und damit den Klemmenkasten 12 auf dem Motorgehäuse 8 halten.

Der Klemmenkasten 12 hat in Richtung der Drehachse 13 gesehen, eine im Wesentlichen rechteckige Außenkontur und ist in den Eckbereichen, also im Bereich gedachter axialer Verlängerungen der Schrauben 11 ausgespart ausgebildet, damit die Schrauben 11 auch bei aufgesetzten Klemmenkasten 12 für ein aus Axialrichtung aufgesetztes Werkzeug zugänglich sind. Diese Eckausnehmungen sind mit 20 gekennzeichnet.

Bei dieser Formgebung ergeben sich bei der dargestellten vertikalen Einbaulage (Saugstutzen 2 und Druckstutzen 3 liegen vertikal übereinander) horizontale Randbereiche 21 und vertikale Randbereiche 22 des Klemmenkastens 12.

Die vertikalen Randbereiche 22 werden bei der dargestellten Ausführungsform zur Herausführung elektrischer Kontakte genutzt, wohingegen die horizontalen Randbereich 21 zur Anordnung von Elektronikbauteilen innerhalb des Klemmenkastens genutzt werden. Da baugleiche Pumpen mit Elektromotoren mit unterschiedlicher Motorelektronik ausgestattet werden können, kann, wie beim Vergleich der Darstellung gemäß Fig. 1 und Fig. 2 deutlich wird, bei Verwendung unterschiedlicher Klemmenkästen, die sich ausschließlich in der radialen Erstreckung der horizontalen Randbereiche 21 unterscheiden, das Innenvolumen des Klemmenkastens variiert werden, ohne dass die elektrischen Anschlüsse hier geändert werden müssen, und zwar weder motorseitig noch klemmenkastenseitig. Die erweiterten horizontalen Randbereiche in Fig. 2 sind mit 21 a gekennzeichnet, der Klemmenkasten mit 12a.

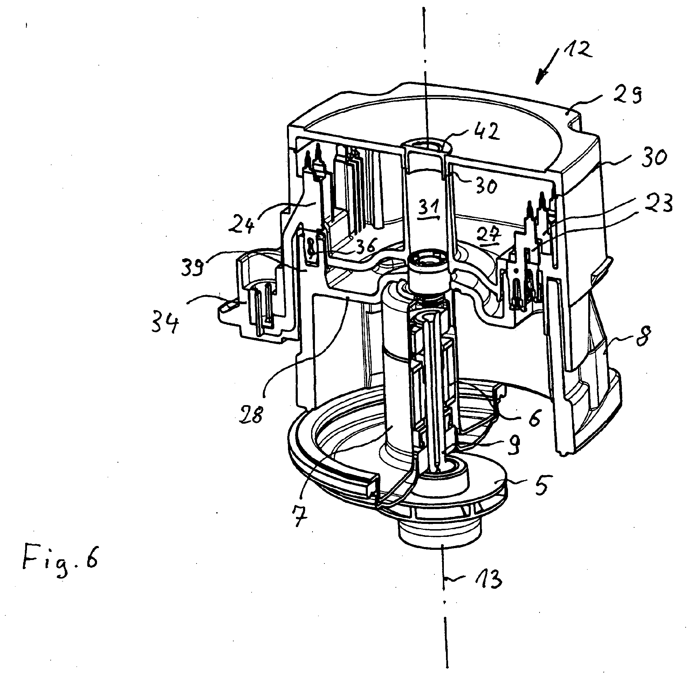

In den vertikalen Randbereichen 22 sind die elektrischen Kontakte angeordnet, und zwar in Achsrichtung vom Klemmenkasten 12 in Richtung zum Pumpengehäuse 1 gesehen sind in dem rechten vertikalen Randbereich 22 die zur Motorwicklung führenden Kontakte 23 und im linken vertikalen Randbereich 22 die zu einem Steckanschluss vom elektrischen Anschluss des Motors herausgeführten Kontakte 24 angeordnet. Diese Kontakte 23 und 24 sind in der Schnittdarstellung gemäß Fig. 6 zu erkennen. Sie sind jeweils aus Blech, also als Stanzteile gebildet und gruppenweise gleich ausgebildet, d. h. alle Kontakte 23 sind zueinander baugleich sowie alle Kontakte 24 sind untereinander baugleich.

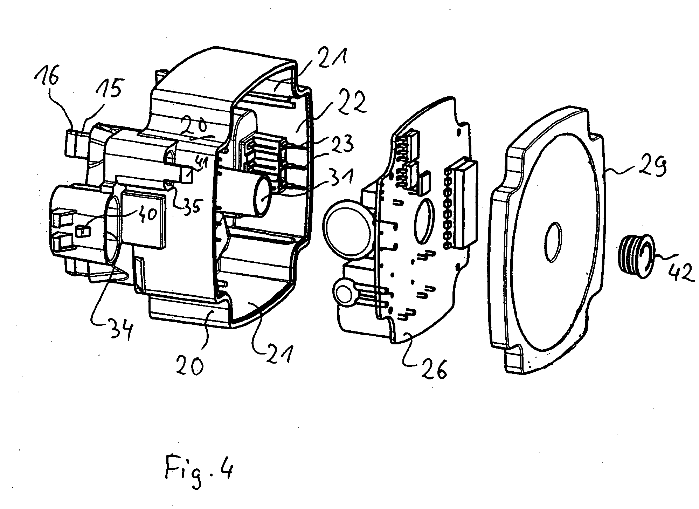

Alle Kontakte 23 und 24 sowie die weiteren an der linken Seite in dem vertikalen Randbereich 22 angeordneten Kontakte 25, welche zur Motorsteuerung dienen, enden im Klemmenkasten 12 an einer Platine 26, die in der Darstellung nach Fig. 6 aus Übersichtsgründen nicht dargestellt ist, jedoch in der Explosionsdarstellung gemäß Fig. 4 sichtbar ist und welche die elektrischen und elektronischen Bauteile der Motorsteuerung trägt, hier insbesondere einen Frequenzumrichter.

Die Kontakte 23, 24 und 25 sind dicht in den aus thermoplastischem Kunststoff gebildeten Klemmenkasten 12 eingegossen und zwar die Kontakte 23 in den Boden 27 des Klemmenkastens 12 und die Kontakte 24 und 25 in den Boden 27 bzw. die daran angrenzende Seitenwand 14.

Der Boden 27 des Klemmenkastens 12 ist vollständig geschlossen ausgebildet und zur Axialwand 28 des Motorgehäuses 8 beabstandet ausgebildet 8 (siehe Fig. 6). Der Boden 27 geht in die ebenfalls geschlossenen Seitenwände 14 über, das axiale Ende der Seitenwände 14 ist durch einen Deckel 29 abgeschlossen, der ebenfalls geschlossen ausgebildet ist (geschlossen bezogen auf das Klemmenkasteninnere). Der Deckel 29 ist durch eine umlaufende Schweißnaht 30 stoffschlüssig mit dem aus Boden 27 und Wandungen 14 bestehenden Grundkörper des Klemmenkastens 12 verbunden. Auf diese Weise ist das Klemmenkasteninnere nicht nur dicht, sondern hermetisch abgeschlossen, d. h. die darin befindliche und empfindliche Elektronik ist zuverlässig gegen Eindringen von Staub, Wasser und Gasen geschützt.

Die Schweißnaht 30 ist durch Laserschweißen von der Deckelseite ausgebildet. Hierzu ist der Deckel 29 aus einem für den Laserstrahl durchlässigem Material gefertigt, wohingegen der Grundkörper, also der Boden 27 und die Seitenwände 14, aus einem für den Laserstrahl im Wesentlichen undurchlässigem Material gefertigt sind. Die Schweißung erfolgt der Gestalt, dass der Laserstrahl von der Deckelseite aus auf die zum Deckel weisenden Stirnseiten der Seitenwände 14 gerichtet wird. Dabei gelangt der Laserstrahl durch den für den Laserstrahl durchlässigen Deckel 29 bis zu den Stirnseiten der Seitenwände 14, wo er das Material aufschmilzt, das aufgrund der Wärmeeinwirkung auch mit dem Deckelmaterial verschmilzt und auf diese Weise eine hermetische Schweißverbindung zwischen den Seitenwänden 14 und dem Deckel 29 bildet, wodurch der Klemmenkasten 12 nach außen hin hermetisch abgeschlossen ist. Dabei erfolgt die Verschweißung nicht nur im Bereich der außen liegenden Wände 14 sondern auch im Bereich der zentralen Ausnehmung 31, also an einer sonst zum Schweißen extrem schlecht zugänglichen Stelle.

Der Klemmenkasten 12 ist durch eine zentrale Ausnehmung 31 durchsetzt, welche in axialer Richtung verläuft, durch einen Stopfen 42 abgeschlossen ist und nicht mit dem Inneren des Klemmenkastens verbunden ist. Diese Ausnehmung 31 führt zu einer ebenfalls mittels einer Schraube verschlossenen Öffnung in der Axialwand 28 des Motorgehäuses 8, über welche das freie Ende der Welle 9 zugänglich ist, um bei einem Blockieren des Rotors 6 diesen von Hand frei drehen zu können. Die diese Öffnung verschließende Schraube ist als eine Art Madenschraube mit Innensechskant ausgebildet, wobei die Innensechskantaufnahme so ausgebildet ist, dass die Schraube beim Entfernen am Werkzeug verbleibt, sodass bei Entfernen des Stopfens 42 mittels eines Schlüssels diese Schraube entfernt und dann mittels eines weiteren Werkzeugs die Welle 9 manuell gedreht werden kann. In umgekehrter Reihenfolge werden die Öffnungen dann wieder verschlossen. Die Ausnehmung 31 durchsetzt den Klemmenkasten 12 also in axialer Richtung, sodass sich ein hermetisch abgeschlossener Ringraum im Klemmenkasten 12 ergibt.

Soweit es die zur Verbindung mit der Motorwicklung vorgesehenen Kontakte 23 angeht, sind diese nach Art einer Muffe 32 in den Boden des Klemmenkastens 12 und zwar in dem rechten vertikalen Randbereich 22 eingeformt. Am Motorgehäuse 8 ist ein an der Axialwand 28 axial zum Klemmenkasten 12 vorspringender Stecker 33 ausgebildet, welcher beim Aufstecken des Klemmenskastens 12 auf das Motorgehäuse 8 mit der Muffe 32 verbunden wird, worüber die elektrische Verbindung zwischen Klemmenkasten 12 und Motorwicklung hergestellt wird.

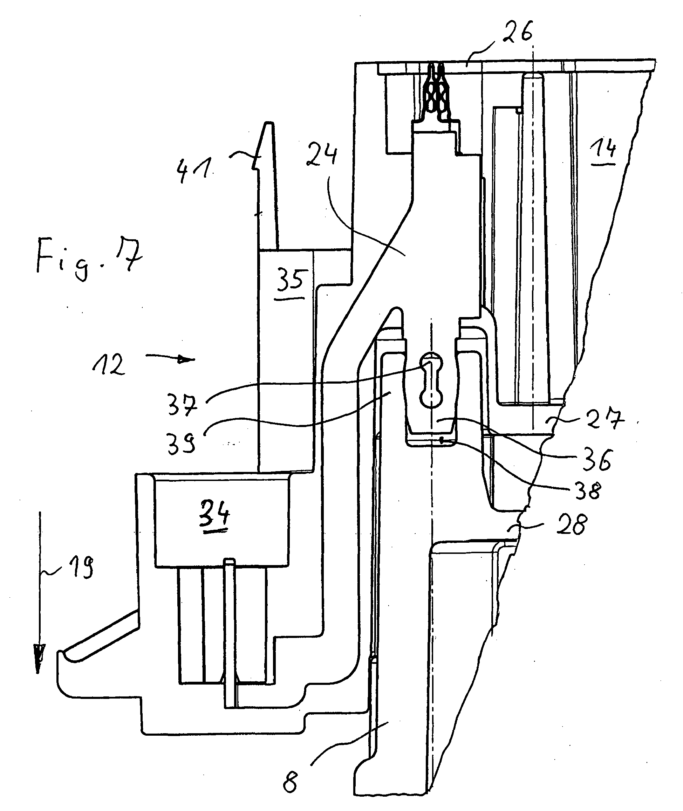

Auf der gegenüberliegenden linken Seite des vertikalen Randbereichs 22 des Klemmenkastens 12 sind die Kontakte 24 mit einem Bein zu einer Muffe 34 und die Kontakte 25 zu einer Muffe 35 herausgeführt. Einer der Kontakte 24, nämlich der in Fig. 7 dargestellte, ist ein Erdungskontakt und dient dazu, das metallische Motorgehäuse 8 mit dem entsprechenden Erdungsanschluss der Muffe 34 bzw. mit dem entsprechenden Erdungsanschluss auf der Platine 26 innerhalb des Klemmenkastens 12 zu verbinden. Hierzu weist der Kontakt 24 an einem Bein einen Steckteil 36 auf, der eine in der Blechebene leicht ballige Form hat sowie eine zentrale Längsausnehmung 37 in Steckrichtung des Steckteils 36. Fluchtend zu dem Steckteil 36 des Erdungskontaktes ist eine muffenartige Ausnehmung 38 in einer axialen Erhebung 39 an der Axialwand 28 des Motorgehäuses 8 vorgesehen. Die Querabmessung der Ausnehmung 38 ist geringfügig kleiner als die Quererstreckung des Steckteils 36 in dem balligen Bereich, sodass beim Einstecken des Steckteils 36 in die Ausnehmung 38 der Steckteil zumindest elastisch, möglicherweise auch plastisch verformt wird, wodurch ein inniger Kontakt zwischen Steckteil 36 und Ausnehmung 38 im Motorgehäuse 8 und somit eine zuverlässige Erdung sichergestellt wird. Damit der Steckteil 36 sich gegebenenfalls auch plastisch verformen kann, ist die Ausnehmung 37 vorgesehen.

Die Nichterdungskontakte 24, die von der Formgebung identisch mit dem Erdungskontakt ausgebildet sind, weisen ebenfalls ein Steckteil 36 mit Ausnehmung 37 auf, sind jedoch in dem Bereich des Steckteils 36 von Kunststoff umgossen, motorseitig ist hier ein Freiraum, da die Erhebung 39 quasi punktuell nur im Bereich des Steckteils 36 des Erdungskontaktes vorgesehen.

Die Kontakte 24 und somit insbesondere auch der Erdungskontakt, der eine innige Verbindung mit dem Motorgehäuse 8 hat, ist in dem Boden 27 bzw. in der Seitenwand 14 zu zwei Beinen abgezweigt ausgebildet (siehe Fig. 7) und verläuft schräg aus dem Klemmenkasten heraus zum Pumpengehäuse 1 hin, parallel am Außenumfang des Motorgehäuses 8 entlang, endet jedoch mit Abstand vor dem Flansch 10 des Motors und ist dort um 180° abgewinkelt, wo die Kontakte 24 zusammen die Muffe 34 bilden, welche zur Aufnahme eines Anschlusssteckers am Ende eines Kabels einer elektrischen Versorgungsleitung dient. Das Gehäuse der Muffe 34 ist einstückig mit dem Klemmenkasten 12 ausgebildet. Die Muffe 34 ist versetzt zum Klemmenkasten 12 neben dem Motorgehäuse 8 am Außenumfang desselben angeordnet. Ein in diese Muffe 34 eingreifender Stecker ist in Axialrichtung, und zwar in Richtung auf das Pumpengehäuse 1 einsteckbar und liegt dann neben dem Klemmenkasten 12, und zwar neben dem linken vertikalen Randbereich 22. Die Muffe 34 weist einen Schnappvorsprung 40, der Teil einer Schnappverbindung ist, deren anderer Teil am Gegenstück, also dem Stecker, vorgesehen ist.

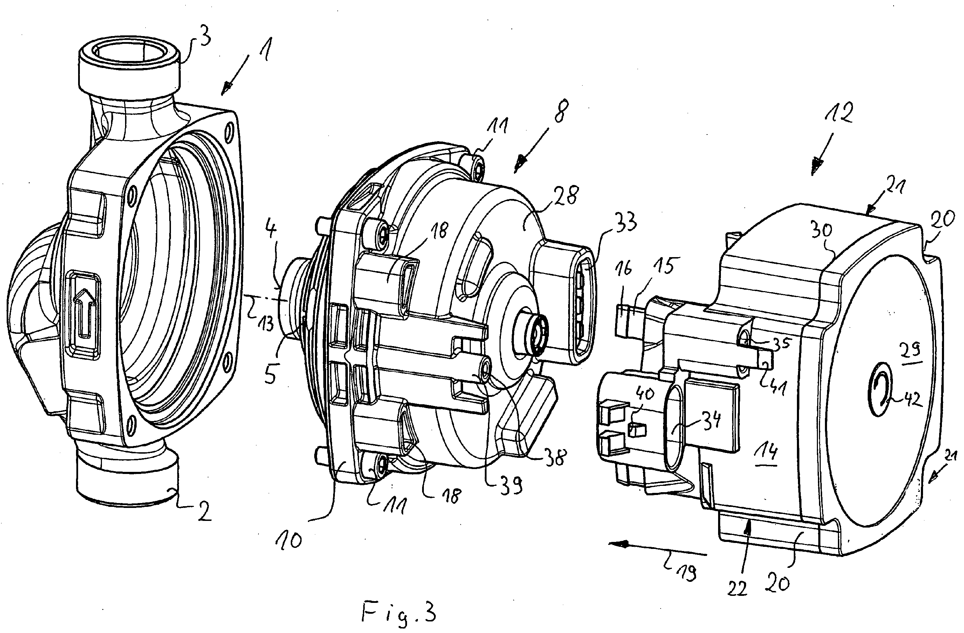

Die Muffe 35, welche die Kontakte 25 aufnimmt, ist in ähnlicher Weise aus dem Klemmenkasten herausgeführt, jedoch durch die Seitenwand 14. Die dort gebildete Muffe 35 liegt in der Darstellung gemäß Fig. 3 an dem linken vertikalen Randbereich 22 am Außenumfang des Klemmenkastens 12 an, ist jedoch anders als die Muffe 34 nicht zum Motorgehäuse 8 hin versetzt angeordnet, sondern liegt direkt neben dem Klemmenkasten 12. Dort weist die Muffe 35 einen Schnappvorsprung 41 auf, welcher den in diese Muffe eingreifenden Stecker gegen Lösen sichert. Die Muffen 34 und 35 sind wie die Muffe 32 einstückig mit dem Klemmenkasten 12 im Kunststoffspritzgussverfahren hergestellt, also durch Umspritzen der Kontakte 23, 24, 25 bei der Herstellung des Klemmenkastengrundkörpers.

Die Muffen 34 und 35 sind als Flachmuffen ausgebildet, derart, dass ihre Kontakte 24 bzw. 25 jeweils nebeneinander in einer im Wesentlichen parallel zum Motorgehäuse 8 angeordneten Ebene befindlich sind. Durch diese Anordnung ist der radiale Bauraum neben dem Motorgehäuse 8 bzw. Klemmenkasten 12 vergleichsweise klein.

Wenn das Motorgehäuse nicht als metallisches Gussgehäuse sondern als Kunststoffgehäuse oder als den Stator umgebene Vergussmasse ausgebildet ist, dann ist die Ausnehmung 38 in der Erhebung des Motorgehäuses mit einem Kontakt versehen, beispielsweise durch eine hohlzylindrische metallische Muffe gebildet, die elektrisch leitend mit dem Statorblechpaket und dem metallischen Spaltrohr 7 verbunden ist, um die elektrische Sicherheit der Heizungsumwälzpumpe für den Fall, dass eines dieser Bauteile durch einen Statordefekt Spannung führt, gewährleistet ist.

### Bezugszeichenliste

- 1: - Pumpengehäuses
- 2: - Saugstutzen
- 3: - Druckstutzen
- 4: - Saugmund
- 5: - Pumpenlaufrad
- 6: - Rotor
- 7: - Spaltrohr
- 8: - Motorgehäuse
- 9: - Welle
- 10: - Flansch von 8
- 11: - Schrauben
- 12: - Klemmenkasten
- 12a: - Klemmenkasten in Fig. 2
- 13: - Drehachse von 9 und 5
- 14: - Seitenwand des Klemmenkastens
- 15: - Zungen von 12
- 16: - Schnappvorsprünge an den Zungen
- 17: - Schnappausnehmungen
- 18: - Führungen
- 19: - Aufsteckrichtung
- 20: - Eckausnehmungen
- 21: - horizontale Randbereiche des Klemmenkastens
- 21a: - horizontale Randbereiche des Klemmenkastens in Fig. 2
- 22: - vertikale Randbereiche
- 23: - Kontakte zum Motor
- 24: - Kontakte zur externen Stromversorgung
- 25: - Kontakte für die Motorsteuerung
- 26: - Platine
- 27: - Boden des Klemmenkastens
- 28: - Axialwand des Motorgehäuses
- 29: - Deckel des Klemmenkastens
- 30: - Schweißnaht
- 31: - zentrale Ausnehmung im Klemmenkasten
- 32: - Muffe im Boden des Klemmenkastens
- 33: - Stecker am Motorgehäuse
- 34: - Muffe der Kontakte 24
- 35: - Muffe der Kontakte 25
- 36: - Steckteil des Kontaktes 24
- 37: - Ausnehmung im Steckteil
- 38: - Ausnehmung in der Erhebung 39
- 39: - Erhebung am Motorgehäuse
- 40: - Schnappvorsprung an der Muffe 34
- 41: - Schnappvorsprung an der Muffe 35
- 42: - Stopfen für die Ausnehmung 31

## Patentansprüche

1. Heizungsumwälzpumpe mit einem Pumpengehäuse (1) mit darin angeordnetem Pumpenlaufrad (5), das von einem Elektromotor angetrieben ist, der in einem axial an das Pumpengehäuse (1) angeflanschten Motorgehäuse (8) angeordnet ist, mit einem axial an das Motorgehäuse (8) anschließenden Klemmenkasten (12) zur Aufnahme von elektrischen und/oder elektronischen Bauteilen für die Motorsteuerung und zum elektrischen Anschluss des Motors, wobei das Motorgehäuse (8) im Bereich zwischen Motorflansch und Klemmenkasten (12) eine kreisrunde Grundkontur in axialer Richtung aufweist, **dadurch gekennzeichnet, dass** der Klemmenkasten (12) das klemmenkastenseitige Ende des Motorgehäuses (8) radial zumindest abschnittsweise überragt und dass der Klemmenkasten eine in axialer Richtung rechteckige Außenkontur mit Aussparungen (20) in den Eckbereichen aufweist, die in axialer Verlängerung von Schrauben (11) angeordnet sind, mit denen der Flansch (10) des Motorgehäuses (8) am Pumpengehäuse (1) befestigt ist.

2. Heizungsumwälzpumpe nach Anspruch 1, **dadurch gekennzeichnet, dass** der Klemmenkasten (12) in seinem das Motorgehäuse (8) radial überragenden Bereich Befestigungsmittel (15, 16) aufweist, mit denen der Klemmenkasten (12) am Motorgehäuse (8) befestigt ist.

3. Heizungsumwälzpumpe: nach Anspruch 1, **dadurch gekennzeichnet, dass** die Befestigungsmittel Schnappverbindungen (16), die das Motorgehäuses (8) radial und axial übergreifen, aufweisen.

4. Heizungsumwälzpumpe nach Anspruch 3, **dadurch gekennzeichnet, dass** im Flanschbereich des Motorgehäuses (8) Ausnehmungen (17) vorgesehen sind, in die Schnappvorsprünge (16) eingreifen, die an Zungen (15) angeordnet sind, die sich von den radial überragenden Teilen (22) des Klemmenkastens (12) in axialer Richtung längs- des Motorgehäuses (8) erstrecken und die am Klemmenkasten (12) angeformt sind, vorzugsweise an den Seiten der Kontaktdurchführungen.

5. Heizungsumwälzpumpe nach einem der vorhergehenden Ansprüche, **dadurch gekennzeichnet, dass** an zwei gegenüberliegenden Seiten im Randbereich (22) des Klemmenkastens (12) die Kontakte (23) zur Motorwicklung einerseits und die Kontakte (24) zum elektrischen Anschluss andererseits angeordnet sind und dass der Klemmenkasten (12) an mindestens einer zu den gegenüberliegenden Seiten um 90° versetzten Seite das Motorgehäuse (8) radial weiter überragt als an den gegenüberliegenden Seiten.

6. Heizungsumwälzpumpe nach einem der vorhergehenden Ansprüche, **dadurch gekennzeichnet, dass** die durch die Klemmenkastenwandung (14, 27) geführten Kontakte (23, 24, 25) eingegossen sind und im Klemmenkasten (12) an einer Platine (26) enden.

7. Heizungsumwälzpumpe nach einem der vorhergehenden Ansprüche, **dadurch gekennzeichnet, dass** die Kontakte (24) zum elektrischen Anschluss als Stecker öder Muffe (34) einer Steckverbindung ausgebildet und der Stecker oder die Muffe (34) Teil des Klemmenkastengehäuses (12) bildet und axial versetzt zum Klemmenkasten (12) und benachbart zum Motorgehäuse (8) angeordnet ist.

8. Heizungsumwälzpumpe nach einem der vorhergehenden Ansprüche, **dadurch gekennzeichnet, dass** der Motor ein Nasslaufmotor ist und der Klemmenkastenboden (27) vom Motorgehäuse (8) beabstandet angeordnet ist.

9. Heizungsumwälzpumpe nach einem der vorhergehenden Ansprüche, **dadurch gekennzeichnet, dass** der Klemmenkasten (12) eine von außen zugängliche axiale zentrale Durchführung (31) zum Motorraum aufweist.

10. Heizungsumwälzpumpe nach einem der vorhergehenden Ansprüche, **dadurch gekennzeichnet, dass** der Motor ein dreiphasiger Gleichstrommotor mit sechs Wicklungen ist.

## Claims

1. A heating circulation pump with a pump housing (1) with a pump impeller (5) which is arranged therein and which is driven by an electric motor arranged in a motor housing (8) axially flanged onto the pump housing (1), with a terminal box (12) which connects axially onto the motor housing (8), for receiving electrical and/or electronic components for the motor control and for the electrical connection of the motor, wherein the motor housing (8) in the region between the motor flange and the terminal box (12) has a circular basic contour in the axial direction, **characterised in that** the terminal box (12) at least in sections projects radially beyond on the end of the motor housing (8) which is on the terminal box side, and that the terminal box has an outer contour which is rectangular in the axial direction and having recesses (20) in the corner regions, said recesses being arranged in the axial extension of screws (11), with which the flange (10) of the motor housing (8) is fastened on the pump housing (1).

2. A heating circulation pump according to claim 1, **characterised in that** the terminal box (12) in its region projecting radially beyond the motor housing (8) comprises fastening means (15, 16), with which the terminal box (12) is fastened on the motor housing (8).

3. A heating circulation pump according to claim 1, **characterised in that** the fastening means comprise snap connections (16) which engage of over the motor housing (8) in a radial and axial manner.

4. A heating circulation pump according to claim 3, **characterised in that** recesses (17) are provided in the flange region of the motor housing (8), into which snap projections (16) engage, said snap projections being arranged on tongues (15) which extend from the radially protruding parts (22) of the terminal box (12) in the axial direction along the motor housing (8) and are integrally formed on the terminal box (12), preferably on the sides of the contact feed-throughs.

5. A heating circulation pump according to one of the preceding claims, **characterised in that** the contacts (23) to the motor winding on the one hand and the contacts (24) for the electrical connection one the other hand are arranged on two oppositely lying sides in the edge region (22) of the terminal box (12), and that the terminal box (12) on at least one side which is offset by 90° to the oppositely lying sides, projects radial further beyond the motor housing (8) than at the oppositely lying sides.

6. A heating circulation pump according to one of the preceding claims, **characterised in that** the contacts (23, 24, 25) which are led through the terminal box wall (14, 27) are cast in and in the terminal box (12) end at a circuit board (26).

7. A heating circulation pump according to one of the preceding claims, **characterised in that** the contacts (24) for the electrical connection are designed as a plug or socket (34) of a plug connection, and the plug or the socket (34) forms part of the terminal box housing (12) and is arranged axially offset to the terminal box (12) and adjacent to the motor housing (8).

8. A heating circulation pump according to one of the preceding claims, **characterised in that** the motor is a wet-running motor and the terminal box base (27) is arranged distanced to the motor housing (8).

9. A heating circulation pump according to one of the preceding claims, **characterised in that** the terminal box (12) comprises an axial, central feed-through (31) to the rotor space, said feed through being accessible from the outside.

10. A heating circulation pump according to one of the preceding claims, **characterised in that** the motor is designed as a three-phase d.c. motor with six windings.

## Revendications

1. Pompe de recirculation de chauffage avec un carter de pompe (1) avec une roue de pompe (5) disposée là-dedans qui est entraînée par un moteur électrique qui est disposé dans un carter de moteur (8) monté directement axialement au carter de pompe (1), avec un boîtier de connexion (12) axialement adjacent au carter de moteur (8) pour la réception de composants électriques et/ou électroniques pour la commande du moteur et pour la connexion électrique du moteur, le carter de moteur (8) présentant dans la zone entre bride de moteur et boîtier de connexion (12), dans la direction axiale, des contours de base circulaires, **caractérisée en ce que** le boîtier de connexion (12) dépasse radialement de l'extrémité du carter de moteur (8) du côté du boîtier de connexion au moins par section et **en ce que** le boîtier de connexion présente des contours extérieurs rectangulaires dans la direction axiale avec des évidements (20) dans les zones d'angle, qui sont disposés en prolongement axial de vis (11) à l'aide desquelles la bride (10) du carter de moteur (8) est fixé au carter de pompe (1).

2. Pompe de recirculation de chauffage selon la revendication 1, **caractérisée en ce que** le boîtier de connexion (12) comprend dans sa zone dépassant radialement de l'extrémité du carter de moteur (8), des moyens de fixation (15, 16) à l'aide desquels le boîtier de connexion (12) est fixé au carter de moteur (8).

3. Pompe de recirculation de chauffage selon la revendication 1, **caractérisée en ce que** les moyens de fixation comprennent des connexions à encliquetage (16) qui recouvrent le carter de moteur (8) axialement et radialement.

4. Pompe de recirculation de chauffage selon la revendication 3, **caractérisée en ce que** des évidements (17) sont prévus dans la zone de bride du carter de moteur (8), dans lesquels s'engagent des saillies d'encliquetage (16) qui sont disposés sur des languettes (15) qui s'étendent à partir des parties (22) radialement proéminentes du boîtier de connexion (12) dans la direction axiale le long du carter de moteur (8) et qui sont moulés sur le boîtier de connexion (12), de préférence sur les côtés des passages de contacts.

5. Pompe de recirculation de chauffage selon l'une quelconque des revendications précédentes, **caractérisée en ce que** sont disposés sur deux côtés opposés dans la zone périphérique du boîtier de connexion (12), les contacts (23) pour l'enroulement du moteur, d'une part, et les contacts (24) pour la connexion électrique, d'autre part, et **en ce que** le boîtier de connexion (12) dépasse du carter de moteur (8) sur au moins un des côtés tournés de 90° par rapport aux côtés opposés, radialement davantage que sur les côtés opposés.

6. Pompe de recirculation de chauffage selon l'une quelconque des revendications précédentes, **caractérisée en ce que** les contacts (23, 24, 25) passant par la paroi (14, 27) du boîtier de connexion sont moulés et se terminent dans le boîtier de connexion (12) sur une platine (26).

7. Pompe de recirculation de chauffage selon l'une quelconque des revendications précédentes, **caractérisée en ce que** les contacts (24) pour la connexion électrique sont conformés comme fiche ou prise (34) d'une connexion à enficher et **en ce que** la fiche ou la prise (34) fait partie du boîtier de connexion (12) et est disposé axialement décalé par rapport au boîtier de connexion (12) et adjacent au carter de moteur (8).

8. Pompe de recirculation de chauffage selon l'une quelconque des revendications précédentes, **caractérisée en ce que** le moteur est un moteur fonctionnant à l'état humide et **en ce que** le fond (27) du boîtier de connexion est disposé espacé du carter de moteur (8).

9. Pompe de recirculation de chauffage selon l'une quelconque des revendications précédentes, **caractérisée en ce que** le boîtier de connexion (12) comprend un passage (31) central axial vers l'espace du rotor, accessible de l'extérieur.

10. Pompe de recirculation de chauffage selon l'une quelconque des revendications précédentes, **caractérisée en ce que** le moteur est un moteur à courant continu à trois phases avec six enroulements.
